# EUROPÄISCHE PATENTANMELDUNG

(11) **EP 4 759 110 A1**
(43) Veröffentlichungstag der Anmeldung: **17.06.2026**
(21) Anmeldenummer: 25224159.1
(22) Anmeldetag: 16.12.2025
(51) Int. Cl.: A01C 5/06

(54) **SÄSCHAR UND SÄMASCHINE MIT WENIGSTENS EINEM SÄSCHAR**

(30) Priorität: 16.12.2024 DE 102024138153
(71) Anmelder: Buck, Martin, 38685 Langelsheim (DE)
(72) Erfinder: Buck, Martin, 38685 Langelsheim (DE)
(74) Vertreter: Dr. Träger & Strautmann PAe PartG mbB

(57) **Zusammenfassung**

Ein Säschar (12) für eine Sämaschine, insbesondere für die Rübensaat, dient insbesondere zur Bereitung eines Saatbetts mit einer Saatfurche für die Ablage von Saatgut, insbesondere Rübensamen. Das Säschar (10) weist einen Scharkörper (11) und eine Schneide (12) auf, insbesondere Schneidkante, die zur Erzeugung einer Saatfurche im Boden dient. Die Schneide (12) ist im Kantenbereich des Scharkörpers (11) angeordnet und ist gehärtet. Insbesondere ist die Schneide aus gehärtetem Material hergestellt ist. Außerdem wird eine Sämaschine mit einem Säschar (10) beschrieben.

## Beschreibung

Die Erfindung betrifft ein Säschar, insbesondere für die Rübensaat, zur Bereitung eines Saatbetts für die Ablage von Saatgut, insbesondere Rübensamen, gemäß dem Oberbegriff des Anspruchs 1. Des Weiteren betriff die Erfindung eine Sämaschine mit wenigstens einem Säschar zur Aussaat von Saatgut, insbesondere für die Rübensaat, gemäß dem Oberbegriff des Anspruchs 14.

Im landwirtschaftlichen Bereich ist die Aussaat für die späteren Erträge wichtig. Dies gilt allgemein für praktisch alle Pflanzenarten. Von besonderem Interesse ist dies aber bei Rüben, wie insbesondere Zuckerrüben und Futterrüben, aber auch für andere Rübenarten, wie Speiserübe, Rote Rübe, Rettich, Kohlrübe oder auch Wurzelpetersilie.

Um Saatgut beziehungsweise Samen in den Boden zu bringen, sind Vertiefungen im Boden vorzubereiten, in die das Saatgut abgelegt wird. Eine bewährte Methode besteht darin, langestreckte Rillen oder Saatfurchen auf dem Acker zu ziehen und die Saatkörner direkt in diese Rille fallen zu lassen. Dazu werden sogenannte Säschare oder Saatschare verwendet, die beim Ziehen durch den Ackerboden mittels einer Sämaschine eine solche Saatfurche erzeugen. In diese Furche kann dann im richtigen Abstand jeweils ein Saatkorn ebenfalls durch die Sämaschine eingebracht werden.

Dabei ist es für einen guten Ertrag wichtig, das Saatgut in der optimalen Tiefe und mit optimalem Abstand zueinander abzulegen. Für Rübenaussaat sind dies typische Tiefen von etwa 3 cm. Die Säschare werden daher so eingestellt, dass sie in der richtigen Tiefe in den Ackerboden eindringen und bei Fortbewegung der Sämaschine eine entsprechende Furche ziehen können.

Im Neuzustand erzeugen die Säschare in der Regel eine optimale Saatfurche, in der die Samenkörner liegen bleiben. Ein Nachteil der bekannten Rübensäschare ist aber, dass diese sich beim Kontakt mit dem Ackerboden schnell abnutzen. Dies führt dazu, dass die Furche nicht mehr die optimale Form und Tiefe aufweist. Auch wenn die Tiefe nachgestellt werden kann, nimmt die Anpassung der Furche an das Saatgut schnell ab. Dann kommt es zur sogenannten Verrollung, also einer Fehlplatzierung des Saatguts in der Saatfurche. Der Ertrag wird durch die nicht mehr optimalen Abstände und Positionen der Pflanzen in erheblichem Maße reduziert.

Es ist daher eine Aufgabe der Erfindung, diese Nachteile zu beseitigen. Insbesondere soll ein möglichst langlebiges Säschar bereitgestellt werden. Es soll eine möglichst dauerhaft sichere beziehungsweise ertragreiche Aussaat erreicht werden.

Ein Säschar mit den Merkmalen des Anspruchs 1 löst diese Aufgabe. Ein derartiges Säschar für eine Sämaschine, insbesondere für die Rübensaat, dient insbesondere zur Bereitung eines Saatbetts mit einer Saatfurche für die Ablage von Saatgut, insbesondere Rübensamen. Das Säschar weist einen Scharkörper und eine Schneide auf, insbesondere Schneidkante, die zur Erzeugung einer Saatfurche im Boden dient. Die Schneide ist im Kantenbereich des Scharkörpers angeordnet. Das Säschar zeichnet sich dadurch aus, dass die Schneide gehärtet ist, insbesondere aus gehärtetem Material hergestellt ist. Damit wird die Standzeit gegenüber bekannten Säscharen erheblich verbessert. Diese weisen üblicherweise lediglich wenig haltbare Werkstoffe auf.

Vorzugsweise ist die Schneide aus Stahl gebildet, insbesondere aus gehärtetem Stahl. Damit wird eine verbesserte Lebensdauer erreicht.

Insbesondere weist das Säschar mit einer Schneide aus einem Wolfram-Carbid-Stahl auf, insbesondere WiDia. Dieses Material weist einen besonderen Härtegrad auf. Dies erhöht die Standzeit deutlich. Dies gilt insbesondere auf aggressiven beziehungsweise abrasiven Böden.

Die Schneide ist insbesondere aus einem anderen Material als der Scharkörper beziehungsweise das übrige Säschar gebildet, vorzugsweise aus einem härteren Material. Folglich wird in den besonderes beanspruchten Bereichen ein haltbareres Material verwendet.

Vorzugsweise ist die Schneide aus wenigstens zwei Teilen, vorzugsweise mehreren Teilen zusammengesetzt. Die Teile der Schneide sind vorzugsweise abschnittsweise, weiter vorzugsweise entlang der Schneide, angeordnet. Damit kann eine besonders haltbare Schneide erreicht werden.

Die Schneide ist insbesondere aus wenigstens einem Schneidenelement, vorzugsweise aus mehreren Schneidenelementen, gebildet. Damit können mehrere Elemente in gerade oder auch gekrümmter Linie zusammengesetzt werden. Kurze Elemente lassen sich insbesondere kostengünstiger beschaffen.

Die Schneide ist bevorzugt fest, vorzugsweise dauerhaft, mit dem Scharkörper verbunden ist, insbesondere durch Verschweißen. Damit kann eine feste Verbindung und/oder ein sicherer Betrieb erreicht werden.

Die Schneide weist bevorzugt einen geradlinigen Verlauf auf, vorzugsweise einen zumindest abschnittsweise geradlinigen Verlauf. Damit kann eine lange Furche erzeugt werden.

Die Schneide weist insbesondere einen gekrümmten Verlauf auf, vorzugsweise einen zumindest abschnittsweise gekrümmten Verlauf. Die Krümmung verläuft vorzugsweise in Schnittrichtung. Dies kann für besondere Einsatzzwecke verwendet werden.

Vorzugsweise weist der Scharkörper wenigstens eine Aufnahme auf, insbesondere ein Loch beziehungsweise einen Durchbruch, für ein Befestigungsmittel zur Befestigung an einer Sämaschine aufweist, vorzugsweise zur lösbaren Befestigung. Damit kann das Säschar an einer Sämaschine austauschbar befestigt werden.

Die Schneide weist im Querschnitt vorzugsweise einen an das Saatgut angepassten Form auf. Weiter bevorzugt entspricht zumindest die untere Kante der Schneide der Form des Saatguts. Damit kann die Saatrille das Saatgut besonders gut aufnehmen.

Besonders bevorzugt ist die Schneide zumindest abschnittsweise kreisbogenförmig und/oder tropfenförmig ausgebildet. Das Saatgut bleibt vorzugsweise an der Saatposition liegen, insbesondere ohne zu verrollen. Der Durchmesser des kreisbogenförmigen beziehungsweise tropfenförmigen Abschnitts der Schneide liegt vorzugsweise zwischen 1 mm und 7 mm, weiter bevorzugt zwischen 3 mm und 5 mm, besonders bevorzugt in etwa 4 mm. Damit kann insbesondere Rübensaatgut gesäät werden. An der Oberseite der Schneide weist diese bevorzugt eine Querabmessung von zwischen 2 mm und 10 mm auf, weiter bevorzugt zwischen 4 mm und 8 mm, insbesondere in etwa 6 mm.

Insbesondere sind an der Schneide im Wesentlichen aufwärts verlaufende Flanken vorgesehen. Vorzugsweise handelt es sich um schräg aufwärts verlaufende Flanken, insbesondere auseinanderlaufende Flanken. Bevorzugt verlaufen die Flanken im Wesentlichen geradlinig. Die Flanken sorgen bevorzugt für eine stabile Saatrille.

Die eingangs geschilderte Aufgabe wird ebenfalls gelöst durch eine Sämaschine mit den Merkmalen des Anspruchs 14. Eine Sämaschine dient zur Aussaat von Saatgut, insbesondere für die Rübensaat. Sie ist insbesondere gekennzeichnet durch wenigstens ein Säschar nach obigen Beschreibungen. Das Säschar weist eine besonders lange Standzeit auf. Damit wird ein hoher Ertrag erreicht.

Bevorzugte Ausführungsbeispiele der Erfindung werden im Folgenden anhand der Figuren der Zeichnung näher beschrieben. In dieser zeigt:
- Fig. 1: ein erfindungsgemäßes Säschar in einer Seitenansicht,
- Fig. 2: ein Schnittansicht des Säschars der Fig. 1,
- Fig. 3: ein weitere erfindungsgemäßes Säschar in einer Seitenansicht, und
- Fig. 4: ein Schnittansicht des Säschars der Fig. 3.

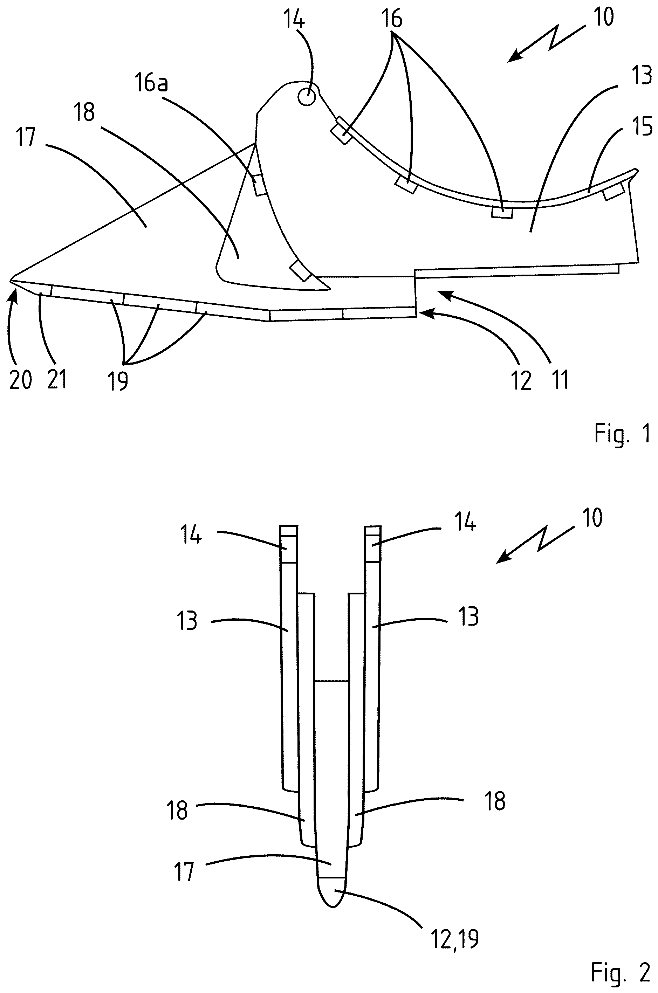

In der Fig. 1 ist als ein Ausführungsbeispiel der Erfindung ein erfindungsgemäßes Säschar 10 dargestellt. Es handelt sich um eine Seitenansicht des Säschars 10. Die Schnittansicht der Fig. 2 zeigt dasselbe Ausführungsbeispiel.

Das Säschar 10 weist einen Scharkörper 11 auf. An der hier unterer Seitenkante des Scharkörpers 11 ist eine Schneide 12 angeordnet. Die Schneide 12 dient zur Ausformung einer Saatfurche im Ackerboden.

Das Säschar 10 kann mit dem Scharkörper 11 an einer hier nicht gezeigten Sämaschine befestigt werden. Dazu ist sind zwei Seitenplatten 13 vorgesehen. Die Seitenplatten 13 werden auch als Streichbleche bezeichnet. Zwischen den Seitenplatten 13 beziehungsweise Streichblechen ist ein freier Bereich, durch den Saatkörner zum Einsäen nach unten fallen können.

Die Seitenplatten 13 weisen hier jeweils einen Durchbruch 14 auf. Durch den Durchbruch 14 kann ein Befestigungselement, wie beispielsweise ein Bolzen, eine Schraube oder ein Splint gesteckt werden. Dies kann insbesondere zur lösbaren Befestigung an der Sämaschine dienen.

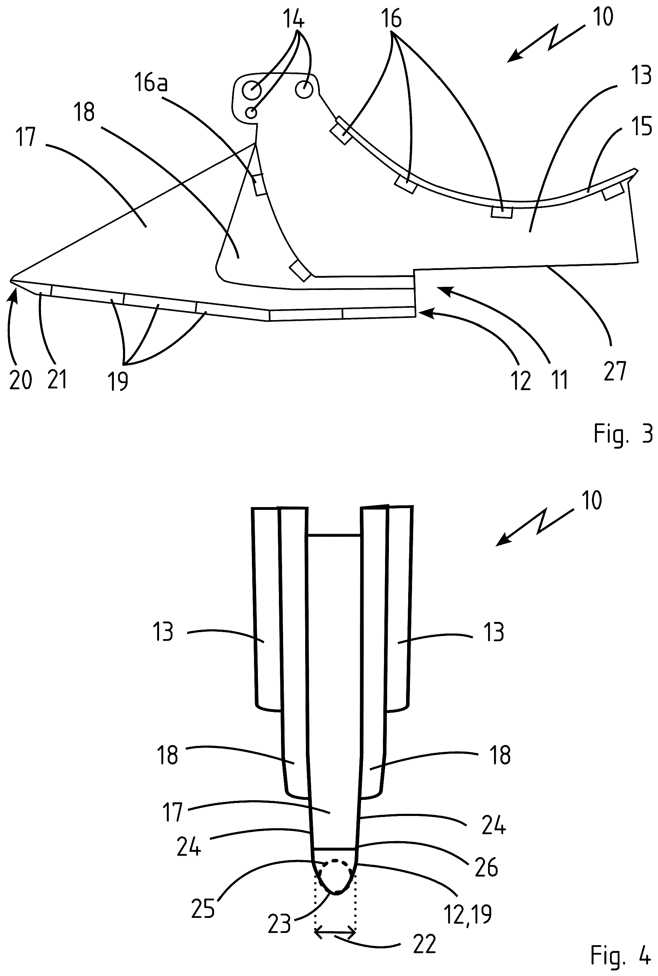

Die Fig. 3 zeigt dazu ein anderes Ausführungsbeispiel, in dem alternative im Säschar 10 beispielhaft mehrere Durchbrüche 14 gezeigt sind. Dies stellt eine andere Befestigungsart dar.

An der oberen Seitenkante einer der Seitenplatten 13 ist beispielhaft eine Halteplatte 15 befestigt. Diese kann zum Abstützen an der Sämaschine dienen. Die Stützplatte 15 ist dazu mit Schweißraupen 16 an der Seitenplatte 13 befestigt.

Die Schneide 12 selbst ist an der hier unteren Seitenkante einer Schneidplatte 17 angeordnet. Die Schneidplatte 17 ist dazu als stabile Platte ausgebildet. Mit Hilfe von zwei seitlich aufgebrachten Stützblechen 18 wird eine flächige Verbindung zwischen der Schneidplatte 17 und den Seitenplatten 13 beziehungsweise Streichblechen hergestellt. Schweißraupen 16a können auch hier zur Herstellung der Verbindung dienen.

Die Schneide 12 ist aus einem gehärteten Material hergestellt. In diesem Fall handelt es sich um gehärteten Stahl, vorzugsweise speziellen Wolfram-Carbid-Stahl.

In den gezeigten Ausführungsbeispielen ist die Schneide 12 aus mehreren Schneidenelementen 18 zusammengesetzt. Damit lässt sich aus relativ kurzen Elementen 18 aus gehärtetem Material die komplette Schneide 12 zusammensetzen. Die Schneidenelemente 18 sind dazu auf die Seitenkante der Schneidplatte 17 aufgeschweißt. Dabei liegen die Schneidenelemente 18 direkt aneinander an. Gegebenenfalls können kleine Lücken zwischen den Schneidenelementen 18 mit Schweißnaht überbrückt sein.

Im Bereich der Scharspitze 20 ist in diesem Fall ein spezielles Schneidenelement 21 vorgesehen. Das Element 21 ist dazu spitz zulaufend geformt. Auf diese Weise kann ein besonders reibungsreduziertes Eintauchen des Säschars 10 in den Boden erreicht werden.

In der Schnittansicht der Fig. 2 ist abgesehen vom Aufbau des Säschars 10 insbesondere auch die Schneide 12 im Schnitt gezeigt. Die Schneide 12 weist eine tropfenförmige Form auf. Auf diese Weise wird eine verollungsarme Form der Saatfurche oder Saatrille erreicht.

Die tropfenförmige Schneide weist im unteren Bereich eine Kreisbogenform auf. Der Durchmesser 22 der kreissegmentartigen unteren Schneidenkante 23 entspricht hier im Wesentlichen dem Durchmesser des Saatguts.

Vom kreisförmigen Bereich ausgehend verlaufen Flanken 24 nach oben, insbesondere, wie hier gezeigt ist, schräg nach oben. Damit wird eine im Querschnitt tropfenförmige Schneide 12 erreicht. Gegebenenfalls kann es sich auch um eine trichterähnliche Form der Schneide 12 handeln.

Die zum Saatgut passende Form der Schneide 12 ist insbesondere gut in der Fig. 4 zu erkennen.

In dieser Darstellung ist dazu beispielhaft ein Exemplar eines kugelförmigen Saatgutkorns 25 beziehungsweise Saatgutpille in gestrichelter Form gezeigt. Die passende Ausformung wird damit verdeutlicht. Die entstehende Saatrille entspricht damit der Form der Schneide 12. Da die Abmessung des Saatguts 25 derjenigen der hier nicht gezeigten Saatrille entspricht, können diese optimal darin abgelegt werden. Die Saatgutkörner 24 liegen idealerweise ohne Verrollung in der Saatrille.

Beispielsweise bei einer Rübensaat sind kugelförmige Saatgutkörner 25 vorhanden. Diese Saatgutkörner 25 weisen typische Durchmesser von in etwa zwischen 3,5 mm bis 4,2 mm auf, typischerweise in etwa 3,6 mm bis 3,7 mm. Damit kann eine Saatrille mit in etwa 3,5 mm Durchmesser optimal für eine sichere Ablage dienen. Vorzugsweise ist daher der Durchmesser 22 der Schneidenkante 23 daran angepasst. Der Durchmesser 22 beträgt bei Rübensaat insbesondere in etwa zwischen 3 mm und 5 mm, besonders bevorzugt in etwa 3,5 mm.

Die Schneide 12 ist im Bereich einer Fügestelle 26 mit der Schneidplatte 17 verbunden. Hierbei handelt es sich um eine dauerhafte Verbindung, insbesondere eine Schweißverbindung. Auf diese Weise wird die Schneide 12 aus den gehärteten Schneidenelementen 21 gebildet. Die Schneidenelemente 21 werden dazu mit der Schneidplatte 17 verschweißt, vorzugsweise einzeln.

In etwa ab der Fügestelle 26 verlaufen hier die Flanken 24 im Wesentlichen geradlinig und/oder schräg nach oben. Damit wird eine gute Stabilität der Sattrille erreicht. Gleichzeitig wird der Verschleiß im Bereich der Schneidplatte 17 vermieden. Die gehärtete Schneide 12 erzeugt die Rille hauptsächlich. Gleichzeitig schützt sie oberhalb angeordnete Bestandteile des Säschars 10 gegen erhöhten Materialabtrag.

Aufgrund der gehärteten Schneide 12 wird außerdem eine sehr hohe Standzeit der erfindungsgemäßen Säschare 10 erreicht. Die geringe Abnutzung der gehärteten Schneide 12 sorgt dafür, dass die Form der Schneide 12 lange erhalten bleibt. Damit kann auch die damit erzeugte Saatfurche optimal ausgeformt werden. Die sich zur Schneide 12 hin leicht verjüngende Form der Schneidplatte 17 verbessert die Standzeit zusätzlich.

Die Stützbleche 18 haben einerseits eine stabilisierende Funktion. Andererseits dienen sie dazu, weiteres Bodenmaterial zur Seite zu drücken. Durch die damit erreichte seitliche Verdrängung des Bodenmaterials wird eine Stabilisierung der Saatrille im oberen Bereich erreicht. Die Saatrille fällt damit nicht so schnell wieder zusammen wie im Stand der Technik.

Eine ähnliche Funktion erfüllen auch die Seitenplatten 13. Diese dienen zum einen zur Stabilisierung des Säschars 10. Außerdem erzeugen sie eine weitere seitliche Verdrängung von Material. Da diese wiederum oberhalb der Stützbleche 18 liegen, erfolgt die zusätzliche Verdrängung ebenfalls oberhalb.

Insbesondere durch diese beschriebene stufenartige Verdrängung von Bodenmaterial im Wesentlichen zu den Seiten hin kann eine besonders stabile Saatrille erzeugt werden.

Von der Unterkante der Schneide 12 bis zur Unterkante der Stützbleche 18 beträgt der Abstand hier in etwa 15 mm. Von der Unterkante der Schneide 12 bis zur freien Unterkante 27 der Seitenplatten 13 beträgt der Abstand hier in etwa 20 mm.

Durch Verwendung der erfindungsgemäßen Säschare 10 an einer hier nicht gezeigten Sämaschine wird eine lange Standzeit mit erheblich verbesserter Flächenleistung erreicht.

Die hier beschriebenen Ausführungsbespiele stellen lediglich beispielhafte Merkmalskombinationen dar, sind jedoch nicht darauf beschränkt. Sofern dies technisch sinnvoll erscheint, lassen sich die Ausführungsbeispiele auch miteinander kombinieren beziehungsweise mit anderen in dieser Anmeldung beschriebenen Merkmalen kombinieren.

Die hierin beschriebenen Werte haben sich insbesondere als für die Rübensaat optimal herausgestellt. Im Fall von anderem Saatgut kann hier natürlich auch mit anderen Abständen und Werten gearbeitet werden. Die grundliegende Idee der Erfindung kann aber in ähnlicher Weise für anderes Saatgut übernommen und optimiert werden.

### Bezugszeichenliste

- 10: Säschar
- 11: Scharkörper
- 12: Schneide
- 13: Seitenplatte
- 14: Durchbruch
- 15: Halteplatte
- 16: Schweißraupe
- 16a: Schweißraupe
- 17: Schneidplatte
- 18: Stützblech
- 19: Schneidenelement
- 20: Scharspitze
- 21: Schneidenelement
- 22: Durchmesser
- 23: Schneidenkante
- 24: Flanke
- 25: Saatgutkorn
- 26: Fügestelle
- 27: Unterkante

## Patentansprüche

1. Säschar für eine Sämaschine, insbesondere für die Rübensaat, zur Bereitung eines Saatbetts mit einer Saatfurche für die Ablage von Saatgut, insbesondere Rübensamen, mit einem Scharkörper (11) und einer Schneide (12), insbesondere Schneidkante, zur Erzeugung einer Saatfurche im Boden, wobei die Schneide (12) im Kantenbereich des Scharkörpers (11) angeordnet ist, **dadurch gekennzeichnet, dass** die Schneide (12) gehärtet ist, insbesondere aus gehärtetem Material hergestellt ist.

2. Säschar nach Anspruch 1, **dadurch gekennzeichnet, dass** die Schneide (12) aus Stahl gebildet ist, insbesondere aus gehärtetem Stahl.

3. Säschar nach Anspruch 1 oder 2, **dadurch gekennzeichnet, dass** die Schneide (12) aus einem Wolfram-Carbid-Stahl gebildet ist, insbesondere WiDia.

4. Säschar nach einem der vorhergehenden Ansprüche, **dadurch gekennzeichnet, dass** die Schneide (12) aus einem anderen Material als der Scharkörper (11) beziehungsweise das übrige Säschar (10) gebildet ist, vorzugsweise aus einem härteren Material.

5. Säschar nach einem der vorhergehenden Ansprüche, **dadurch gekennzeichnet, dass** die Schneide (12) aus wenigstens zwei Teilen, vorzugsweise mehreren Teilen zusammengesetzt ist, wobei die Teile der Schneide (12) vorzugsweise abschnittsweise, weiter vorzugsweise entlang der Schneide (12), angeordnet sind.

6. Säschar nach einem der vorhergehenden Ansprüche, **dadurch gekennzeichnet, dass** die Schneide (12) wenigstens einem Schneidenelement (19), vorzugsweise aus mehreren Schneidenelementen (19), ausgebildet ist.

7. Säschar nach einem der vorhergehenden Ansprüche, **dadurch gekennzeichnet, dass** die Schneide (12) fest, vorzugsweise dauerhaft, mit dem Scharkörper (11) verbunden ist, insbesondere durch Verschweißen.

8. Säschar nach einem der vorhergehenden Ansprüche, **dadurch gekennzeichnet, dass** die Schneide (12) einen geradlinigen Verlauf aufweist, vorzugsweise einen zumindest abschnittsweise geradlinigen Verlauf.

9. Säschar nach einem der vorhergehenden Ansprüche, **dadurch gekennzeichnet, dass** die Schneide (12) einen gekrümmten Verlauf, vorzugsweise einen zumindest abschnittsweise gekrümmten Verlauf aufweist

10. Säschar nach einem der vorhergehenden Ansprüche, **dadurch gekennzeichnet, dass** der Scharkörper (11) wenigstens eine Aufnahme, insbesondere ein Loch beziehungsweise einen Durchbruch (14), für ein Befestigungsmittel zur Befestigung an einer Sämaschine aufweist, vorzugsweise zur lösbaren Befestigung.

11. Säschar nach einem der vorhergehenden Ansprüche, **dadurch gekennzeichnet, dass** die Schneide (12) im Querschnitt eine an das Saatgut angepasste Form aufweist und/oder dass zumindest die untere Kante der Schneide (12) der Form des Saatguts entspricht beziehungsweise ähnelt.

12. Säschar nach einem der vorhergehenden Ansprüche, **dadurch gekennzeichnet, dass** die Schneide (12) zumindest abschnittsweise kreisbogenförmig und/oder tropfenförmig ausgebildet ist, wobei der Durchmesser des kreisbogenförmigen beziehungsweise tropfenförmigen Abschnitts der Schneide (12) vorzugsweise zwischen 1 mm und 7 mm liegt, weiter bevorzugt zwischen 3 mm und 5 mm, besonders bevorzugt in etwa 4 mm, und/oder wobei die Schneide an der Oberseite bevorzugt eine Querabmessung von zwischen 2 mm und 10 mm aufweist, weiter bevorzugt zwischen 4 mm und 8 mm, insbesondere in etwa 6 mm.

13. Säschar nach einem der vorhergehenden Ansprüche, **dadurch gekennzeichnet, dass** an der Schneide (12) im Wesentlichen aufwärts verlaufende Flanken vorgesehen sind, vorzugsweise schräg aufwärts verlaufende Flanken (24), insbesondere auseinanderlaufende Flanken (24) und/oder zumindest im Wesentlichen geradlinig verlaufende Flanken (24).

14. Sämaschine zur Aussaat von Saatgut, insbesondere für die Rübensaat, **gekennzeichnet durch** wenigstens ein Säschar (10) nach einem der vorhergehenden Ansprüche.
